# EUROPEAN PATENT APPLICATION

(11) **EP 3 643 493 A1**
(43) Date of publication of application: **29.04.2020**
(21) Application number: 18202420.8
(22) Date of filing: 24.10.2018
(51) Int. Cl.: B32B 5/02, C08J 5/04, C08L 69/00

(54) **CO-POLYCARBONATE RESIN MATERIALS AND MATERIALS MADE THEREFROM**

(71) Applicant: SABIC Global Technologies B.V., 4612 PX Bergen op Zoom (NL)
(72) Inventor: VANDORMAEL, Bart, 4612 PX Bergen op Zoom (NL); RATOUIT, Guillaume, 4612 PX Bergen op Zoom (NL); RAMAKRISHNAN, Vaidyanath, 4612 PX Bergen op Zoom (NL); HOEKS, Theodorus, 4612 PX Bergen op Zoom (NL)
(74) Representative: Balder IP Law, S.L.

(57) **Abstract**

Co-polycarbonate polymeric resin materials and composites made therefrom are described. A co-polycarbonate polymeric resin material can include at least 35 wt.% of at least one poly(aliphatic ester)-polycarbonate copolymer, where the co-polycarbonate polymeric resin material has a shear melt viscosity of 50 to 500 Pa.s measured at 275 °C.

## Description

### A. Field of the Invention

The invention generally concerns co-polycarbonate polymeric resin materials and materials made therefrom. The co-polycarbonate polymeric resin material can include at least 35 wt.% of at least one poly(aliphatic ester)-polycarbonate copolymer. The co-polycarbonate polymeric resin material can include a shear melt viscosity of 50 to 500 Pa.s measured at 275 °C.

### B. Description of Related Art

In electronic and electrical devices such as notebook personal computers, e-books, and tablet personal computers, metallic body panels are being replaced by materials that are lighter in weight and offer a robust combination of mechanical properties. These lighter materials result in weight savings, cost savings, and enable the manufacture of complex designs. While these lighter materials can be used to manufacture panels having thinner cross-sectional thicknesses, it is desirable to improve the stiffness of the material to prevent warping. It is also desirable to improve the flame retardancy of the material to reduce fire related hazards.

The resins currently used to produce lighter weight materials (*e*.*g*., thermoplastic composites) are typically melt processed at 300 °C. However, many of these resins have a glass transition temperature of around 145 °C. These high processing temperatures can limit the resin's compatibility with in-mold decoration (IMD) films and overmolding compounds. Furthermore, new sustainability regulations & standards for consumer electronics applications, (*e*.*g*.,IEEE1680.1-2018), require materials to include at least 2 wt.% post-consumer or biobased polymers and non-halogenated flame retardant systems. The addition of flame retardant and/or type of resin used in producing composite materials can affect the stability of the material (*e*.*g*., film stability such as shape/breakage). Without wishing to be bound by theory, it is believed this is due to the reduction of interaction between the polymeric chains (plasticization effects). The reduction of stability (*e*.*g*., decreased melt strength) can be counteracted by reducing the process speed (from 5 m/min to 2.5 m/min) or by reducing the die lip temperature (which will increase the viscosity to stabilize the film thereby reducing melt impregnation). However, these measures can limit production and/or quality of the products (*e*.*g*., fiber-containing composites) made from the resin.

Various attempts to produce materials that address the quality of resins and/or the processing at high temperatures have been described. For example, U.S. Patent Nos. 9,718,956 to van der Mee et al. and 9,169,395 to Peek et al., and International Patent Application Publication No. WO 2017/207611 to Meyer et al., each describe multi-layer composites that include a siloxane-based polymer or copolymer or a grafted silicone polymer to improve the impact strength and environmental stress crack resistance. One of the problems with these composites is that they increase the amount of non-biobased polymers present in the materials.

While products and thermoplastic resins are known, there is a continuing interest in developing polycarbonate based resins which have the advantageous physical and chemical properties for producing light weight durable products.

### SUMMARY OF THE INVENTION

A discovery has been made that provides a solution to at least some of the problems associated with processing polycarbonate resins. The discovery is premised on a co-polycarbonate polymeric resin material that includes at least 35 wt.% of at least one poly(aliphatic ester)-polycarbonate copolymer. Such a resin material can have a shear melt viscosity of 200 to 500 Pa.s measured at 275 °C and 500 L/s. The co-polycarbonate polymeric resin material of the present invention can be a blend of at least two poly(aliphatic ester)-polycarbonate copolymers of different molecular weights and/or a branched polycarbonate resin. One poly(aliphatic ester)-polycarbonate copolymer can have a weight average molecular weight of from about 15,000 to about 25,000 Daltons, and another poly(aliphatic ester)-polycarbonate copolymer can have a weight average molecular weight of 30,000 to about 40,000 Daltons. At least one of the poly(aliphatic ester)-polycarbonate copolymer can also be biobased and/or obtained from post-consumer goods, which can be helpful in meeting the aforementioned sustainability regulations & standards for consumer electronics applications (*e*.*g*.,IEEE1680.1-2018). Further, the co-polycarbonate polymeric resin material of the present invention can have a higher mass volume flow (MVR) rate compared to the regular polycarbonate, which can provide enhanced fiber impregnation/wet out during prepregging as compared to the polycarbonate homopolymers with same molecular weight. The co-polycarbonate polymeric resin material of the present invention can also provide higher ductility than a polycarbonate with same Mw. These advantages are realized even in the presence of flame retardant agents. The co-polycarbonate polymeric resin material can be used to make unidirectional (UD) tapes. Such UD tapes can be used for the manufacturing of laminates for applications in the consumer electronics market. As shown in a non-limiting manner, it was surprisingly found that a mixed molecular weight high flow ductile (HFD) co-polycarbonate blend of the present invention, in combination with a branched polycarbonate, stabilized a melt polymer film and retained an acceptable viscosity to ensure processability. By way of example, the co-polycarbonate polymeric resin material of the present invention can be extruded into a film of 10 to 200 microns, cryogenically grinded into a micronized powder, or dissolved in a solvent.

In one aspect of the present invention, co-polycarbonate polymeric resin materials are described. A co-polycarbonate polymeric resin material can include at least 35 wt.% of at least one poly(aliphatic ester)-polycarbonate copolymer and the co-polycarbonate polymeric resin material can have a shear melt viscosity of 200 to 500 Pa.s measured at 275 °C and 500 L/s. The co-polycarbonate polymeric resin material can also have a glass transition (T_{g}) temperature of 100 °C to 140 °C. At least one poly(aliphatic ester)-polycarbonate copolymer can be a poly(aliphatic ester)-polycarbonate copolymer having a molecular weight of at least 30,000 Daltons, preferably 30,000 to 40,000 Daltons, a poly(aliphatic ester)-polycarbonate copolymer having a molecular weight of up to 25,000 Daltons, preferably 15,000 to 25,000 Daltons, or a blend thereof. In one instance, the resin can include 37% to 100% of the at least one poly(aliphatic ester)-polycarbonate copolymer having a molecular weight of at least 30,000 Daltons, preferably 30,000 to 40,000. In another instance, the polymeric resin can include a blend of a poly(aliphatic ester)-polycarbonate copolymer having a molecular weight of up to 25,000 Daltons, preferably 15,000 to 25,000 Daltons, and a branched polycarbonate polymer. In yet another instance, the polymeric resin can include a blend that includes the poly(aliphatic ester)-polycarbonate copolymer having a molecular weight of at least 30,000 Daltons, preferably 30,000 to 40,000, the poly(aliphatic ester)-polycarbonate copolymer having a molecular weight of up to 25,000 Daltons, preferably 15,000 to 25,000 Daltons and a branched polycarbonate polymer. In some instances, the co-polycarbonate polymeric resin material can include a siloxane polycarbonate copolymer. At least one poly(aliphatic ester)-polycarbonate copolymer can include 5 to 10 mol.% of sebacic acid and/or at least one poly(aliphatic ester)-polycarbonate copolymer can be derived from bisphenol-A and sebacic acid. The co-polycarbonate polymeric resin material of the present invention can also include optional flame retardants, additives, or any combination thereof. Non-limiting examples of flame retardants can include phosphate flame retardants, alkyl sulfonate salts, carbonate salts, fluoro-anion complex materials, or organic compounds, or any combination thereof. Non-limiting examples of additives include a mold release agent, a filler material, a thermal stabilizer, a chain extender, a quencher, a color or melt stabilizers, or mixtures thereof.

In another aspect of the present invention, fiber composites are described. A fiber composite can include at least one fiber layer of a fiber material and the co-polycarbonate polymeric resin material of the present invention. The fiber layer can include a fiber volume fraction of at least 30%, preferably 30 to 60%, and/or a thickness of 100 to 300 micrometers. The fiber material can be a continuous fiber, preferably a continuous glass, carbon, ceramic, aramid, or polymeric fiber, or any combination thereof. The fiber composite can be comprised in multi-layer composites (*e*.*g*., stacks and/or laminates made from stacked material). In some embodiments the fiber composite is a UD tape. The multi-layer composite can include a first layer of the fiber composite having continuous fibers aligned in a first direction, and a second layer of the fiber composite continuous fibers aligned in a second direction that is angularly disposed relative to the first direction where the smallest angle between the first direction and the second direction is from 20 to 90 degrees, preferably 30 to 90 degrees, more preferably 45 to 90 degrees. In some embodiments, the multi-layer composite is a laminate and/or has a UL94 V2 rating or better.

Other embodiments of the invention are discussed throughout this application. Any embodiment discussed with respect to one aspect of the invention applies to other aspects of the invention as well and vice versa. Each embodiment described herein is understood to be embodiments of the invention that are applicable to other aspects of the invention. It is contemplated that any embodiment discussed herein can be implemented with respect to any method or composition of the invention, and vice versa. Furthermore, compositions the invention can be used to achieve methods of the invention.

The following includes definitions of various terms and phrases used throughout this specification.

The term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated (aliphatic), divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy. "Cycloalkyl" and "cycloalkylene" mean a monovalent and divalent cyclic hydrocarbon group, respectively, of the formula -CₙH2ₙ₋ₓ and -CₙH2ₙ₋₂ₓ- wherein x is the number of cyclizations. "Aryl" means a monovalent, monocyclic, or polycyclic aromatic group (e.g., phenyl or naphthyl). "Arylene" means a divalent, monocyclic, or polycyclic aromatic group. "Alkylarylene" means an arylene group substituted with an alkyl group. "Arylalkylene" means an alkylene group substituted with an aryl group (e.g., benzyl). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of any substituents.

The term glass transition temperature (T_{g}) refers to the temperature at which transition of a glass state of an amorphous structure (non-crystalline) into a flexible state.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The co-polycarbonate polymeric resin material of the present invention can "comprise," "consist essentially of," or "consist of' particular ingredients, components, compositions, *etc.* disclosed throughout the specification. With respect to the transitional phrase "consisting essentially of," in one non-limiting aspect, a basic and novel characteristic of the co-polycarbonate polymeric resin material of the present invention having shear melt viscosity of 200 to 500 Pa.s measured at 275 °C and 500 L/s allows the processability at temperatures lower than HFD polycarbonate polymers.

Other objects, features and advantages of the present invention will become apparent from the following detailed description and examples. It should be understood, however, that the detailed description and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### DETAILED DESCRIPTION OF THE INVENTION

A discovery has been made that provides a solution to at least some of the problems associated with the continuous processing of polycarbonate polymeric resin material and/or flame resistant polycarbonate polymeric resin material used to make composites and multi-layer composites. The discovery is premised on a co-polycarbonate polymeric resin material that includes at least 35 wt.% of at least one poly(aliphatic ester)-polycarbonate copolymer. Such a resin material can have a shear melt viscosity of 200 to 500 Pa.s measured at 275 °C and 500 L/s. Examples of non-limiting advantages of the resin materials of the present invention include (1) the ability to meet various sustainability regulations & standards for consumer electronics applications (*e*.*g*., IEEE1680.1-2018), (2) a higher mass volume flow (MVR) rate compared to the regular polycarbonate, which can provide enhanced fiber impregnation/wet out during prepregging as compared to the polycarbonate homopolymers with same molecular weight, (3) higher ductility than a polycarbonate with same Mw, (4) extrudability into films having a thickness of 10 to 200 microns, cryogenically grindable into micronized powder, or dissolvable in a solvent, and/or (5) processability such that fiber composites (e.g., UD tapes) can be produced at line speeds of 2.5 m/min, preferably 3 to 7 m/min, or more preferably, from 4 to 7 m/min or 5 to 7 m/min.

These and other non-limiting aspects of the present invention are discussed in further detail in the following sections.

### A. Co-polymeric Carbonate Polymeric Resin Material

The co-polycarbonate polymeric resin material can have a shear melt viscosity of 200 to 500 Pa.s measured at 275 °C, or at least equal to, or between any two of 200, 225, 275, 300, 325, 350, 375, 400, 425, 450, 475 and 500 Pa.s. at 275 °C in accordance with ISO6721. The co-polycarbonate polymeric resin material can also have a glass transition (T_{g}) temperature of 100 °C to 140 °C, or at least 100 °C, 110 °C, 115 °C, 120 °C, 125 °C, 130 °C, 135 °C, or 140 °C or any range or value there between as determined using differential scanning calorimetry (DSC). DSC measurements can be performed using a DSC TA Q20 (TA Instruments, USA) and an intracooler or chiller capable of reaching -90 °C. The measurements can be performed under inert atmosphere (*e*.*g*., nitrogen gas flow) to avoid degradation. DSC methodology can include heating the sample to 25 °C to 220 °C at a rate of 10 °C/min, holding for 1 to 4 (about 3) min at the final temperature, cooling the sample from 220 °C to 25 °C at a rate of 10 °C/min, and then heating the sample against from 25 °C to 220 °C at the same rate. Measurements can be cycled twice to ensure that the sample does not change during the measurement. In embodiments, when a flame retardant is incorporated into the co-polycarbonate polymeric resin material, the UL94 V rating of 1 mm of the polycarbonate polymeric resin material or materials made therefrom can be greater than V2. The co-polycarbonate polymeric resin material can also have an notched Izod impact (INI) strength of greater than 60 kiloJoules per meter squared (kJ/m²), or greater than 80 kJ/m², or greater than 85 kJ/m², or greater than 90 kJ/m², or greater than 95 kJ/m², when measured at 23 °C at 5.5 J on a sample bar molded from the composition and having a thickness of 3 millimeters, in accordance with ISO 180. The co-polycarbonate polymeric resin material can also have a tensile modulus of elasticity of greater than 2,100 MPa, or greater than 2,110 MPa, or greater than 2,120 MPa, or greater than 2,130 MPa, or greater than 2,140 MPa, or greater than 2,150 MPa, when measured in accordance with ISO527. The co-polycarbonate polymeric resin material can also have a tensile stress at yield of greater than 50 MPa, or greater than 55 MPa, or greater than 56 MPa, or greater than 57 MPa, or greater than 58 MPa, or greater than 59 MPa, when measured in accordance with ISO527. The co-polycarbonate polymeric resin material can also have a tensile elongation at break of greater than 60%, or greater than 70%, or greater than 75%, or greater than 80%, or greater than 90%, or greater than 100%, or greater than 110%, or greater than 115%, or greater than 120%, or greater than 125%, or greater than 130%, or greater than 135%, when measured in accordance with ISO527. The co-polycarbonate polymeric resin material can also have a Vicat softening temperature of greater than or equal to 120 °C, greater than or equal to 125 °C, greater than or equal to 130 °C, when measured on a 1 mm² specimen at a load of 50 N and a heating rate of 120 °C/h according to ISO306.

The co-polycarbonate resin material can include one or more poly(aliphatic ester)-polycarbonate copolymer materials, which are described in more detail in the below Materials Section. A poly(aliphatic ester)-polycarbonate copolymer having weight average molecular weight of 30,000 to 40,000 Daltons, or at least, equal to one of, or between any two of 30,000 Daltons, 31000 Daltons, 32,000 Daltons, 33,000 Daltons, 34,000 Daltons, 35,000 Daltons, 36,000 Daltons, 37,000 Daltons, 38,000 Daltons, 39,000 Daltons and 40,000 Daltons as measured by gel permeation chromatograph (GPC based on BPA homopolycarbonate standards) can be included in at least 35 wt.% in the co-polycarbonate resin material. The poly(aliphatic ester)-polycarbonate copolymer having a molecular weight of 30,000 Daltons and 40,000 Daltons can include from 5 to 10 mol%, or 5, 6, 7, 8, 9, or 10.0 mole % or any value or range there between of sebacic acid, preferably about 6 mol% of sebacic acid. In one instance, this poly(aliphatic ester)-polycarbonate(s) can be derived from bisphenol-A and sebacic acid. The high MW poly(aliphatic ester)-polycarbonate copolymer can have a biocontent of from about 4 wt. % to about 10 wt. %, 5 wt.% to 9 wt.%, 6 wt.% to 8 wt.%, or any range or value there between as measured according to ASTM D6866. In some embodiments, this poly(aliphatic ester)-polycarbonate copolymer can have a melt volume flow rate (MVR), measured at 300 °C/1.2 kg, of 1 to 10 cc/10 min, specifically 5 to 7 cc/10 min. The amount of this poly(aliphatic ester)-polycarbonate copolymer in the co-polycarbonate resin material is at least 35 wt.% to 100 wt.%, or about 40 wt.% to 95 wt.%, or at least, equal to, or between any two of 35, 40, 45, 50, 55, 60, 65, 70, 75, 80, 85, 90, 95 and wt.%. This poly(aliphatic ester)-polycarbonate copolymer can have a MVR, measured at 300 °C/1.2 kg, of 15 to 50 cc/10 min, specifically 30 to 40 cc/10 min.

In some embodiments, the co-polycarbonate resin material can include the poly(aliphatic ester)-polycarbonate copolymer having a molecular weight of 15,000 to 25,000 Daltons or at least, equal to, or between any two of 15,000 Daltons, 16,000 Daltons, 17,000 Daltons, 18,000 Daltons, 19,000 Daltons, 20,000 Daltons, 21,000 Daltons, 22,000 Daltons, 23,000 Daltons, 24,000 Daltons, and 25,000 Daltons as measured by gel permeation chromatograph (GPC based on BPA homopolycarbonate standards). The poly(aliphatic ester)-polycarbonate copolymer having a molecular weight of 10,000 Daltons and 25,000 Daltons can include from 5 to 10 mol%, or 5, 6, 7, 8, 9, or 10.0 mole % or any value or range there between of sebacic acid, preferably about 8.25 mol% of sebacic acid. In one instance, the poly(aliphatic ester)-polycarbonate(s) can be derived from bisphenol-A and sebacic acid. In some embodiments, this copolymer can have a biocontent of from about 4 wt. % to about 10 wt. %, 5 wt.% to 9 wt.%, 6 wt.% to 8 wt.%, or any range or value there between as measured according to ASTM D6866. The amount of this poly(aliphatic ester)-polycarbonate copolymer in the co-polycarbonate resin material is at least 35 wt.% to 50 wt.%, or about 40 wt.% to 45 wt.%, or at least, equal to, or between any two of 35, 40, 45, and 50 wt.%. This poly(aliphatic ester)-polycarbonate copolymer can have a MVR, measured at 300 °C/1.2 kg, of 15 to 50 cc/10 min, specifically 30 to 40 cc/10 min.

Specifically, the co-polycarbonate polymeric resin material includes at least 35 wt.% of a poly(aliphatic ester)-polycarbonate. In some embodiments, the co-polycarbonate polymeric resin material can include at 35 wt.% to 60 wt.% of the poly(aliphatic ester)-polycarbonate copolymer having a molecular weight of 30,000 to 40,000 Daltons (high molecular weight (MW) poly(aliphatic ester)-polycarbonate) and 35 wt.% to 60 wt.% of poly(aliphatic ester)-polycarbonate copolymer having a molecular weight of 15,000 to 25,000 Daltons (low MW poly(aliphatic ester)-polycarbonate). By way of example, the co-polycarbonate polymeric resin material can include 37 to 41 wt.% of the high MW poly(aliphatic ester)-polycarbonate copolymer and 59 to 63 wt.% of the low MW poly(aliphatic ester)-polycarbonate. In another example, the co-polycarbonate polymeric resin material can include 55 wt.% of the high MW poly(aliphatic ester)-polycarbonate copolymer and 37 wt.% of the low MW poly(aliphatic ester)-polycarbonate.

In some other instances, branched polycarbonates can be used in combination with high MW poly(aliphatic ester)-polycarbonate copolymer and/or low MW poly(aliphatic ester)-polycarbonate. The branched polycarbonate can have a molecular weight of 30,000 to 40,000 Daltons or any value or range there between. The branched polycarbonate can have a MVR, measured at 300 °C/1.2 kg, of 1 to 10 cc/10 min, specifically 2 to 3 cc/10 min.

The co-polycarbonate polymeric resin material can include 25 to 50 wt.% of the branched polycarbonate and 35 to 75 wt.% of the low MW poly(aliphatic ester)-polycarbonate. In another example, the co-polycarbonate polymeric resin material 25 to 50 wt.% of the branched polycarbonate and 25 to 50 wt.% of the low MW poly(aliphatic ester)-polycarbonate copolymer and/or 25 to 50 wt.% of recycled polycarbonate resin. In yet another example, the co-polycarbonate polymeric resin material 25 to 30 wt.% of the branched polycarbonate and 25 to 45 wt.% of the low MW poly(aliphatic ester)-polycarbonate, 25 to 40 wt.% of recycled polycarbonate resin, and 25 to 40 wt.% of poly(carbonate-siloxane).

In another instance, the co-polycarbonate polymeric resin material can include 25 to 40 wt.% of the high MW poly(aliphatic ester)-polycarbonate copolymer and 10 to 25 wt.% of the low MW poly(aliphatic ester)-polycarbonate copolymer and 25 to 50 wt.% of poly(carbonate-siloxane). The polycarbonate-siloxane can be transparent or opaque. A transparent poly(carbonate-siloxane) can have 5 to 10 mol.% of siloxane blocks, preferably 6 mol.% and an opaque poly(carbonate-siloxane) can have 15 to 30 mol.% of siloxane blocks, preferably 18 to 25 mol.% of siloxane blocks. Without wishing to be bound by theory, it is believed a that poly(carbonate-siloxane) can provide synergist effect when used in combination with a phosphorous-based flame retardant.

In some embodiments, the biocontent of the co-polycarbonate polymeric resin material can be 1 to 10 wt.%, or at least, equal to, or between any two of 1, 2, 3, 4, 5, 6, 7, 8, 9 10 wt.%, preferably 4 wt.% to 20 wt.% as measured according to ASTM D6866.

The co-polycarbonate polymeric resin material can also include a combination of additives, which can be referred to as an "additive package". Non-limiting examples of additives include a mold release agent, a filler material, a thermal stabilizer, a chain extender, a quencher, a color or melt stabilizer (*e*.*g*., alkyl toluenesulfonate material), fillers, flame retardant synergists, reinforcing agents, antioxidants, antistatic agents, colorants such as such as titanium dioxide, carbon black, and organic dyes, surface effect additives, radiation stabilizers, flame-retardants, and anti-drip agents, or mixtures thereof and the like. In some embodiments, co-polycarbonate polymeric resin material includes 0.01 to 0.5 wt.% of a mold release agent, 0.01 to 0.5 wt.% of a thermal stabilizer, and 0.01 to 0.5 wt.% of a chain extender, and/or 0.01 to 5 wt.% of a flame retardant. An amount of additives range in the co-polycarbonate resin material can range from 0.01 to 10 wt.%, or be greater than or substantially equal to any one of, or between any two of 0.1, 0.5, 1, 1.5, 2, 2.5, 3, 3.5, 4, 4.5, 5, 5.5, 6, 6.5, 7, 7.5, 8, 8.5, 9, 9.5, and 10 wt.%. Additives are described in more detail in the Materials section.

In an embodiment, the co-polycarbonate polymeric resin material can exclude or be substantially free of components other than poly(aliphatic ester)-polycarbonate(s), the branched polycarbonated, the mold release agent, the thermal stabilizer, and the chain extender, and/or the flame retardant described herein. In this context, the term "substantially free" means that other additive component are not intentionally added to the composition.

The co-polycarbonate polymeric resin material carbonate composition can be manufactured by various methods known in the art. For example, poly(aliphatic ester)-polycarbonate, and other optional components are first blended, optionally with any fillers, in a high speed mixer or by hand mixing. The blend is then fed into the throat of a twin-screw extruder *via* a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

### B. Materials

### 1. Poly(aliphatic ester)-polycarbonate(s)

The poly(aliphatic ester)-polycarbonate(s) of the present invention can be copolymers that include carbonate units and ester units. These can also be referred to as "polyester-polycarbonates". Generally, as used herein, the term or suffix "polycarbonate" means a polymer or copolymer having repeating structural carbonate units of formula (1) 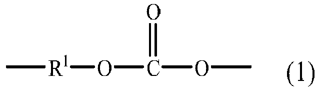 where at least 60 percent of the total number of R¹ groups can be aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 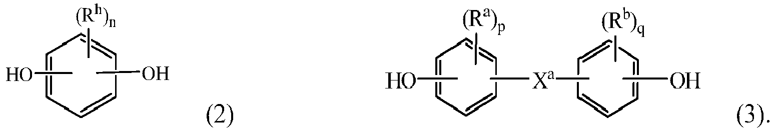 In formula (2), each R^{h} can be independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. In formula (3), R^{a} and R^{b} can each independently be a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an embodiment, p and q are both 0, or p and q are both 1, and R^{a} and R^{b} are each a C₁₋₃ alkyl group, specifically methyl, disposed *meta* to the hydroxy group on each arylene group. X^{a} is a bridging group connecting the two hydroxy-substituted aromatic groups, where the bridging group and the hydroxy substituent of each C₆ arylene group are disposed *ortho, meta, or para* (specifically *para*) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Non-limiting examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl) ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl) ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

Polycarbonates can include homopolycarbonates (wherein each R¹ in the polymer is the same), copolymers that include different R¹ moieties in the carbonate ("copolycarbonates"), and copolymers comprising carbonate units and other types of polymer units, such as ester units or siloxane units.

Poly(aliphatic ester)-polycarbonate copolymer ("poly(ester-carbonate)s") further include in addition to recurring carbonate chain units of formula (1), repeating ester units of formula (4) 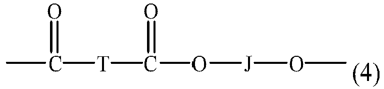 where J can be a divalent group derived from a dihydroxy compound (which includes a reactive derivative thereof) and T can be a divalent group derived from a dicarboxylic acid (which includes a reactive derivative thereof). Non-limiting examples of J can include a C₂₋₁₀ alkylene, a C₆₋₂₀ cycloalkylene, a C₆₋₂₀ arylene, or a polyoxyalkylene group in which the alkylene groups contain 2 to 6 carbon atoms, specifically, 2, 3, or 4 carbon atoms. Non-limiting examples of T can include a C₂₋₂₀ alkylene, a C₆₋₂₀ cycloalkylene, or a C₆₋₂₀ arylene. Copolyesters containing a combination of different T or J groups can be used. The polyester units can be branched or linear.

Specific dihydroxy compounds include aromatic dihydroxy compounds of formula (2) (e.g., resorcinol), bisphenols of formula (3) (e.g., bisphenol A), a C₁₋₈ aliphatic diol such as ethane diol, n-propane diol, i-propane diol, 1,4-butane diol, 1,6-cyclohexane diol, 1,6-hydroxymethylcyclohexane, or a combination comprising at least one of the foregoing dihydroxy compounds. Aliphatic dicarboxylic acids that can be used include C₆₋₂₀ aliphatic dicarboxylic acids (which includes the terminal carboxyl groups), specifically linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,6-cyclohexane dicarboxylic acid, or a combination comprising at least one of the foregoing acids. A combination of isophthalic acid and terephthalic acid wherein the weight ratio of isophthalic acid to terephthalic acid is 91:9 to 2:98 can be used.

Specific ester units include ethylene terephthalate units, n-proplyene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary, for example 1:99 to 99:1, specifically, 10:90 to 90:10, more specifically, 25:75 to 75:25, or from 2:98 to 15:85. In some embodiments, the molar ratio of ester units to carbonate units in the poly(ester-carbonate)s can vary from 1:99 to 30: 70, specifically 2:98 to 25:75, more specifically 3:97 to 20:80, or from 5:95 to 15:85.

A specific example of a poly(ester)-polycarbonate is a poly(aliphatic ester)-polycarbonate copolymer derived from a linear C₆₋₂₀ aliphatic dicarboxylic acid (which includes a reactive derivative thereof), specifically a linear C₆-C₁₂ aliphatic dicarboxylic acid (which includes a reactive derivative thereof). Specific dicarboxylic acids include n-hexanedioic acid (adipic acid), n-decanedioic acid (sebacic acid), and alpha, omega-C₁₂ dicarboxylic acids such as dodecanedioic acid (DDDA). A specific poly(aliphatic ester)-polycarbonate copolymer is of formula (5): 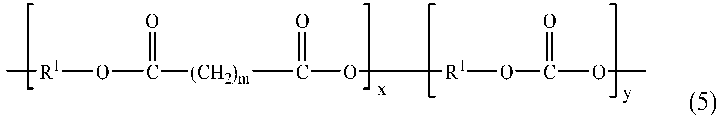 wherein each R¹ can be the same or different, and is as described in formula (1), m is 4 to 18, specifically 5 to 10, or 6 to 9, and the average molar ratio of ester units to carbonate units x:y is 99:1 to 1:99, including 13:87 to 2:98, or 9:91 to 2:98, or 8:92 to 2:98. In a specific embodiment, the poly(aliphatic ester-polycarbonate) comprises bisphenol A sebacate ester units and bisphenol A carbonate units, having, for example an average molar ratio of x:y of 2:98 to 8:92, for example 6:94. Such poly(aliphatic ester)-polycarbonate copolymers(s) are commercially available as LEXAN® HFD 8089 and HFD 8090 from SABIC (LEXAN is a trademark of SABIC IP B. V.).

Polycarbonates can be manufactured by processes such as interfacial polymerization and melt polymerization, which are known, and are described, for example, in WO 2013/175448 to Lin et al. WO 2014/072923 to Fernandez et al., or WO 2018/122720 to Xu et al. An endcapping agent (also referred to as a chain stopper agent or chain terminating agent) can be included during polymerization to provide end groups, for example monocyclic phenols such as phenol, p-cyanophenol, and C₁-C₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

In the manufacture of poly(ester-carbonate)s by interfacial polymerization, rather than using the dicarboxylic acid or diol directly, the reactive derivatives of the diacid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used.

Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%.

In some embodiments, a particular type of branching agent is used to create branched polycarbonate materials. These branched polycarbonate materials can have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole percent (mol%) and less than 20 mol% compared to the bisphenol monomer. Such branching agents include aromatic triacyl halides of formula (8), a tri-substituted phenol of formula (9), or a compound of formula (10) (isatin-bis-phenol) 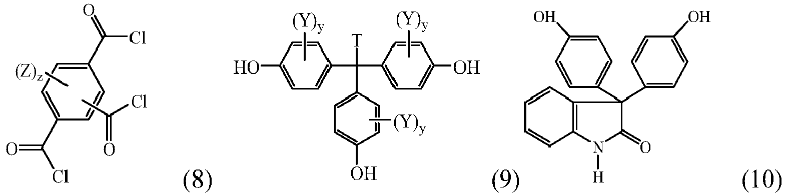 where in formula (8), Z is a halogen, C₁₋₃ alkyl, C₁₋₃ alkoxy, C₇₋₁₂ arylalkylene, C₇₋₁₂ alkylarylene, or nitro, and z is 0 to 3; and in formula (9) wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, and s is 0 to 4. In general, the amount of branching agent is effective to provide 0.1 to 10 branching units per 100 R¹ units, specifically 0.5 to 8 branching units per 100 R¹ units, and more specifically 0.75 to 5 branching units per 100 R¹ units. Examples of specific branching agents that are particularly effective in the compositions include trimellitic trichloride (TMTC), tris-p-hydroxyphenylethane (THPE), and isatin-bis-phenol. A branched, cyanophenol end-capped bisphenol A homopolycarbonate produced via interfacial polymerization, containing 3 mol% 1,1,1-tris(4-hydroxyphenyl)ethane (THPE) branching agent, is commercially available under the trade name LEXAN CFR from SABIC.

In an embodiment, the composition further comprises a poly(carbonate-siloxane), also referred to in the art as a polycarbonate-polysiloxane copolymer. The polysiloxane blocks comprise repeating di-organosiloxane units as in formula (12) 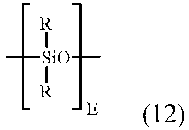 where each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent poly(carbonate-siloxane) is desired, R is unsubstituted by halogen. Combinations of the foregoing R groups can be used in the same copolymer.

The value of E in formula (12) can vary widely depending on the type and relative amount of each component in the thermoplastic composition, the desired properties of the composition, and like considerations. Generally, E has an average value of 2 to 1,000, specifically 2 to 500, 2 to 200, or 2 to 125, 5 to 80, or 10 to 70. In an embodiment, E has an average value of 10 to 80 or 10 to 40, and in still another embodiment, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

A combination of a first and a second (or more) poly(carbonate-siloxane) copolymers can be used, wherein the average value of E of the first copolymer is less than the average value of E of the second copolymer.

In an embodiment, the polysiloxane blocks are of formula (13) or (14) 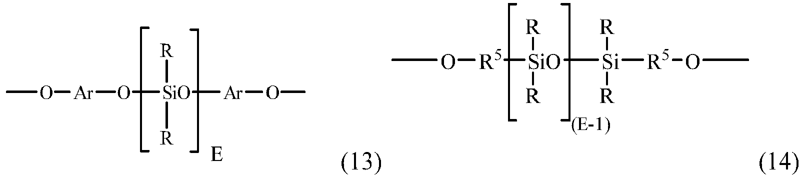 where E is as defined in formula (12); each R can be the same or different, and is as defined in formula (12). In formula (13), Ar can be the same or different, and is a substituted or unsubstituted C₆₋₃₀ arylene, wherein the bonds are directly connected to an aromatic moiety. Ar groups in formula (13) can be derived from a C₆₋₃₀ dihydroxyarylene compound, for example a dihydroxyarylene compound. Suitable dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used. In formula (14), each R⁵ is independently a divalent C₁₋₃₀ organic group, and wherein the polymerized polysiloxane unit is the reaction residue of its corresponding dihydroxy compound. In a specific embodiment, the polysiloxane blocks are of formula (15): 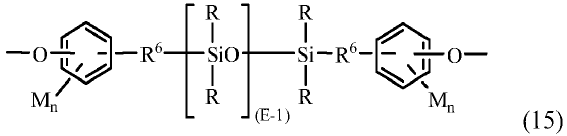 where R and E are as defined in formula (12). R⁶ in formula (15) can be a divalent C₂₋₈ aliphatic. Each M in formula (15) can be the same or different, and can be a halogen, cyano, nitro, C₁₋₈ alkylthio, C₁₋₈ alkyl, C₁-C₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkyleneoxy, C₇₋₁₂ alkylarylene, or C₇₋₁₂ alkylarylenoxy, wherein each n is independently 0, 1, 2, 3, or 4.

In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, and R6 is a divalent C₁-C₃ aliphatic group. Specific polysiloxane blocks are of the formula 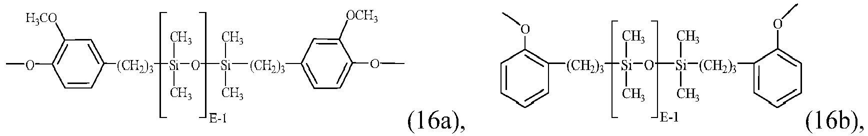 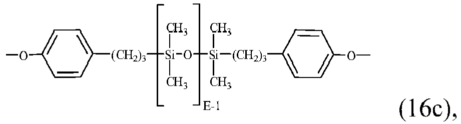 or a combination comprising at least one of the foregoing, wherein E has an average value of 2 to 200, 2 to 125, 5 to 125, 5 to 100, 5 to 50, 20 to 80, or 5 to 20. Blocks of formulas (16a), (16b), or (16c) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers can include carbonate units (1) derived from bisphenol A, and repeating polysiloxane blocks (16a), (16b), (16c), or a combination comprising at least one of the foregoing (specifically of formula 16a), wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane) copolymers.

The poly(carbonate-siloxane) copolymers can include 50 to 99 wt% of carbonate units and 1 to 50 wt% siloxane units. Within this range, the polyorganosiloxane-polycarbonate copolymer can comprise 70 to 98 wt%, more specifically 75 to 97 wt% of carbonate units and 2 to 30 wt%, more specifically 3 to 25 wt% siloxane units. In another embodiment, the polycarbonate is a poly(carbonate-siloxane) copolymer can include bisphenol A carbonate units and siloxane units, for example blocks containing 5 to 200 dimethylsiloxane units, such as those commercially available under the trade name EXL from SABIC. Other specific polycarbonates that can be used include poly(ester-carbonate-siloxane)s comprising bisphenol A carbonate units, isophthalate-terephthalate-bisphenol A ester units, and siloxane units, for example blocks containing 5 to 200 dimethylsiloxane units, such as those commercially available under the trade name FST from SABIC. The poly(carbonate-siloxane) copolymers can have a weight average molecular weight of 2,000 to 100,000 g/mol, specifically 5,000 to 50,000 g/mol as measured by GPC using a crosslinked styrene-divinyl benzene column, at a sample concentration of 1 mg/mL, and as calibrated with polycarbonate standards. The poly(carbonate-siloxane) copolymers can have a MVR, measured at 300 °C/1.2 kg, of 1 to 50 cc/10 min, specifically 2 to 30 cc/10 min. Mixtures of poly(carbonate-siloxane) copolymers of different flow properties can be used to achieve the overall desired flow property.

In some embodiments, all or a portion of the poly(ester-carbonate)s used in the co-polycarbonate resin material can be obtained from the processing of post-consumer materials. For example, compact disc or water bottles can be processed to obtain the poly(ester-carbonate)s of the desired molecular weight.

### 2. Additives

As previously described, the co-polycarbonate polymeric resin material can also include a combination of additives, which can be referred to as an "additive package". Non-limiting examples of such additives include acid scavengers, coupling agents, carbon black, antioxidants, thermal stabilizers, chain extenders, mold release agents, fillers, plasticizers, lubricants, ultraviolet (UV) stabilizers, heat stabilizers, UV absorbers, impact modifiers, crosslinking agents, flame retardants, and processing aids. Examples of these additives are provided below.

Non-limiting examples of acid scavengers suitable for use in the present invention include metal stearates, a hydrotalcite, a metal hydroxide, a metal carbonate, or mixtures thereof. The metal portion can be zinc or calcium. Metal stearates include zinc stearate and calcium stearate, which are available from various commercial vendors. Hydrotalcite can be an aluminum (Al), magnesium (Mg) hydroxide carbonate hydrate having the general formula of Mg_{4.3} to ₆Al₂CO₃(OH)_{12.6} to ₁₆·4(H₂O). Hydrotalcite and synthetic hydrotalcite are available from commercial vendors, for example Hycite® 713 is available from Clariant AG Corp. (Switzerland) and DHT-4A® from Kisuma Chemicals BV, (The Netherlands). A molar ratio of Mg/Al in the hydrotalcite can range from 3 to 5, 4 to 4.5, or 4.1 to 4.3. Naturally occurring hydrotalcite and synthetic hydrotalcite can be used interchangeably. In some instances, the co-polycarbonate resin material does not include a metal oxide, preferably does not include zinc oxide, calcium oxide, or magnesium oxide, or any combination thereof or all thereof.

Coupling agents can include maleic anhydride grafted polyethylene, maleic anhydride grafted polypropylene, or a combination that includes at least one of the foregoing. Non-limiting examples of commercially available coupling agents include Polybond® 3150 maleic anhydride grafted polypropylene from Chemtura (U.S.A.), Fusabond® P613 maleic anhydride grafted polypropylene, from DuPont (U.S.A.), and Priex® 20097 maleic anhydride grafter polypropylene homopolymer from Addcomp (Germany). The co-polycarbonate resin material can include, based on the total weight of the co-polycarbonate resin material, 0.1 to 5 wt.% coupling agent or greater than or substantially equal to any one of, or between any two of 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, and 5.0 wt.% of coupling agent.

The amount of carbon black in the co-polycarbonate resin material can range up to 3 wt.%, or be greater than or substantially equal to any one of, or between any two of 0.01, 0.1, 0.05, 0.5, 1, 1.25, 1.5, 1.75, 2, 2.25, 2.5, 2.75, and 3 wt.%. Carbon black can be obtained as a dispersion in a polymer (*e*.*g*., master batch carbon black). Carbon black master batches can be obtained from various commercial sources. An amount of carbon black in the master batch can range from 30 to 40% carbon black or any value there between. The co-polycarbonate resin material can include up to 5 wt.% of a carbon black master batch, be greater than or substantially equal to any one of, or between any two of 0.1, 0.5, 1, 1.5, 2, 2.5, 3, 3.5, 4, 4.5, and 5 wt.%.

Non-limiting examples of antioxidants include sterically hindered phenolic compounds, aromatic amines, a phosphite compound, carbon black and the like. Non-limiting examples of phenolic antioxidants include 2,6-di-*tert*-butyl-4-methylphenol (CAS No. 128-37-0), pentaerythritol-tetrakis(3-(3,5-di-*tert*-butyl-4-hydroxyphenyl)propionate (CAS No. 6683-19-8), octadecyl 3-(3',5'-di-*tert*-butyl-4-hydroxyphenyl)propionate (CAS No. 2082-79-3), 1,3,5-trimethyl-2,4,6-tris-(3,5-di-*tert*-butyl-4-hydroxybenzyl)benzene (CAS No. 1709-70-2), 2,2'-thiodiethylenebis(3,5-di-*tert*-butyl-4-hydroxyphenyl)propionate (CAS No. 41484-35-9), calcium bis(ethyl 3,5-di-*tert*-butyl-4-hydroxybenzylphosphonate) (CAS No. 65140-91-2), 1,3,5-tris(3',5'-di-*tert*-butyl-4'-hydroxybenzyl)-isocyanurate (CAS No. 27676-62-6), 1,3,5-tris(4-*tert*-butyl-3-hydroxy-2,6-dimethylbenzyl)-1,3,5-triazine-2,4,6-(1H,3H,5H)-trione (CAS No. 40601-76-1), 3,3-bis(3-*tert*-butyl-4-hydroxyphenyl)ethylene butyrate (CAS No. 32509-66-3), 4,4'-thiobis(2-*tert*-butyl-5-methylphenol) (CAS No. 96-69-5), 2,2'-methylene-bis-(6-(1-methyl-cyclohexyl)-para-cresol) (CAS No. 77-62-3), 3,3'-bis(3,5-di-*tert*-butyl-4-hydroxyphenyl)-N,N'-hexamethylenedipropionamide (CAS No. 23128-74-7), 2,5,7,8-tetramethyl-2-(4',8',12'-trimethyltridecyl)-chroman-6-ol (CAS No. 10191-41-0), 2,2-ethylidenebis(4,6-di-tertbutylphenol) (CAS No. 35958-30-6), 1,1,3-tris(2-methyl-4-hydroxy-5'-*tert*-butylphenyl)butane (CAS No. 1843-03-4), 3,9-bis(1,1-dimethyl-2-(beta-(3-*tert*-butyl-4-hydroxy-5-methylphenyl)propionyloxy)ethyl)-2,4,8,10-tetraoxaspiro[5.5]undecane (CAS No. 90498-90-1;), 1,6-hexanediyl-bis(3,5-bis(1,1-dimethylethyl)-4-hydroxybenzene)propanoate) (CAS No. 35074-77-2), 2,6-di-*tert*-butyl-4-nonylphenol (CAS No. 4306-88-1), 4,4'-butylidenebis(6-*tert*-butyl-3-methylphenol (CAS No. 85-60-9); 2,2'-methylene bis(6-*tert*-butyl-4-methylphenol) (CAS No. 119-47-1), triethylenglycol-bis-(3-*tert*-butyl-4-hydroxy-5-methylphenyl)propionate (CAS No. 36443-68-2), a mixture of C₁₃ to C₁₅ linear and branched alkyl esters of 3-(3',5'-di-*tert*-butyl-4'-hydroxyphenyl)propionic acid (CAS No. 171090-93-0), 2,2'-thiobis(6-*tert*-butyl-*para*-cresol) (CAS No. 90-66-4), diethyl-(3,5-di-tert-butyl-4-hydroxybenzyl)phosphate (CAS No. 976-56-7), 4,6-bis (octylthiomethyl)-*ortho*-cresol (CAS No. 110553-27-0), benzenepropanoic acid, octyl 3-(3,5-di-tert-butyl-4-hydroxyphenyl)propanoate (CAS No. 125643-61-0), 1,1,3-tris[2-methyl-4-[3-(3,5-di-tert-butyl-4-hydroxyphenyl)propionyloxy]-5-*tert*-butylphenyl] butane (CAS No. 180002-86-2), mixed styrenated phenols (CAS No. 61788-44-1), butylated, octylated phenols (CAS No. 68610-06-0), butylated reaction product of p-cresol and dicyclopentadiene (CAS No. 68610-51-5).

Non-limiting examples of thermal stabilizer additives include one of tris(2,4-di-*tert-*butylphenyl)phosphite (CAS No. 31570-04-4, Irgafos® 168 (BASF)), tris(2,4-di-*tert-*butylphenyl)phosphate (CAS No. 95906-11-9), bis(2,4-di-*tert*-butylphenyl)pentaerythritol diphosphite (CAS No. 26741-53-7); and tetrakis (2,4-di-butylphenyl)-4,4'-biphenylene diphosphonite (CAS No. 119345-01-6), and bis (2,4-dicumylphenyl)pentaerythritol diphosphite (CAS No. 154862-43-8). Thermal stabilizers may be used in amounts of 0.01 to 0.5 wt%, or 0.1 to 0.5 wt%, or 0.1 to 0.2 wt%, based on the total weight of the composition.

Non-limiting examples of chain extender additives include epoxy compounds, acrylic and methacrylic acid-derived polymers and copolymers, polyols multifunctional acid anhydrides, polyacids, polyamines, isocyanates, phosphate esters, aziridines, oxazolines, multivalent metal compounds, and phosphite esters. These can be used either alone respectively or in combinations with each other. In an embodiment, the chain extender is a highly functional modified styrene acrylic polymer having a molecular weight of about 6,800 g/mol (Joncryl® ADR-4368). However, the epoxy compound is not especially limited, but is a compound having at least two epoxy groups per molecule. Chain extenders may be used in amount of 0.01 to 0.5 wt%, or 0.1 to 0.5 wt%, or 0.1 to 0.2 wt%, based on the total weight of the composition.

Mold release agents can include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like. A non-limiting examples of a mold release agent is glycerol monostearate, pentaerythritol tetrastearate, or a combination that includes at least one of the foregoing, preferably wherein the mold release agent is glycerol monostearate. In an embodiment, the composition includes 0.01 to 0.5 wt.%, or 0.1 to 0.5 wt.%, or 0.1 to 0.2 wt.%, of the mold release agent based on the total weight of the composition.

Non-limiting examples of fillers include mineral fillers are mica, talcum, clay, fumed silica, calcium carbonate, dolomite, wollastonite, barium sulfate, silica, kaolin, feldspar, barytes, or the like, or a combination comprising at least one of the foregoing mineral fillers. The mineral filler may have an average particle size of about 0.1 to about 20 micrometers, specifically about 0.5 to about 10 micrometers, and more specifically about 1 to about 3 micrometers. In some embodiments, the fillers can also be flame retardant synergists. Non-limiting examples of fillers that are flame retardant synergists are talcum, clay, fumed silica, calcium carbonate and the like.

Plasticizers and lubricants can be used. There is considerable overlap among mold release agents, plasticizers, and lubricants. Any suitable material described herein as a mold release agent can be used as a plasticizer or lubricant. Such materials are generally used in amounts of 0.01 to 1 wt.%, more or 0.01 to 0.5 wt.%, based on the total weight of the composition. Phosphates such as Bisphenol A bis(diphenyl phosphate) (BPADP), resorcinol bis (diphenyl phosphate) (RDP), and SOLDP (a proprietary oligomeric phosphate additive supplied by ICL Industrial Products can be used as effective plasticization agents for co-polycarbonate. The co-polycarbonate resin material can include, based on the total weight of the co-polycarbonate resin material , 0.1 to 5 wt.% plasticizer or lubricant, or greater than or substantially equal to any one of, or between any two of 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, and 5.0 wt.% of coupling agent.

Non-limiting examples of UV stabilizers include hindered amine light stabilizers, hydroxybenzophenones, hydroxyphenyl benzotriazoles, cyanoacrylates, oxanilides, hydroxyphenyl triazines, and combinations thereof. Non-limiting examples of hindered amine light stabilizers include dimethyl succinate polymer with 4-hydroxy-2,2,6,6-tetramethyl-1-piperidine ethanol (CAS No. 65447-77-0); poly[[6-((1,1,3,3-tetramethylbutyl)amino)-1,3,5-triazine2,4diyl][(2,2,6,6-tetramethyl-4-piperidyl)imino]hexamethylene[2,2,6,6-tetramethyl-4-piperidyl)imino]] (CAS No. 70624-18-9); and 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS No. 106990-43-6).

Non-limiting examples of heat stabilizers include phenothiazine, p-methoxyphenol, cresol, benzhydrol, 2-methoxy-p-hydroquinone, 2,5-di-tert-butylquinone, diisopropylamine, and distearyl thiodipropionate (CAS No. 693-36-7). In a preferred embodiment, distearyl thiodipropionate which is sold under the trade name Irganox® PS 820 (BASF, Germany) is used. In some embodiments, a mixture of at least two of 1,3,5-trimethyl-2,4,6-tris-(3,5-di-tert-butyl-4-hydroxybenzyl) benzene sold under the trade name of Irganox® 1330 (BASF, Germany), tris[2,4-bis(2-methyl-2-propanyl)phenyl]phosphite sold under the trade name of Irgafos® 168 (BASF, Germany), pentaerythritol-tetrakis (3-(3,5-di-tert-butyl-4-hydroxyphenyl) propionate sold under the trade name Irganox® 1010 (BASF, Germany), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane sold under the trade name of Chimassorb 119 (BASF, Germany) can be used.

Non-limiting examples of UV absorbers include 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, or combinations thereof.

Non-limiting examples of impact modifiers include elastomers/soft blocks dissolved in matrix-forming monomer(s), such as, for example, bulk HIPS, bulk ABS, reactor modified PP, Lomod, Lexan EXL, and/or the like, thermoplastic elastomers dispersed in matrix material by compounding, such as, for example, di-, tri-, and multiblock copolymers, (functionalized) olefin (co)polymers, and/or the like, pre-defined core-shell (substrate-graft) particles distributed in matrix material by compounding, such as, for example, MBS, ABS-HRG, AA, ASA-XTW, SWIM, and/or the like, or combinations thereof.

Non-limiting examples of cross- linking agents include divinylbenzene, benzoyl peroxide, alkylenediol di(meth)acrylates, such as, for example, glycol bisacrylate and/or the like, alkylenetriol tri(meth)acrylates, polyester di(meth)acrylates, bisacrylamides, triallyl cyanurate, triallyl isocyanurate, allyl(meth)acrylate, diallyl maleate, diallyl fumarate, diallyl adipate, triallyl esters of citric acid, triallyl esters of phosphoric acid, or combinations thereof.

Non-limiting examples of flame retardant additives include nitrogen-phosphorus compounds, phosphoric acid, organo-phosphorus compounds, nitrogen-containing polymers, talc, sulfonates or salts thereof, halogen-containing compounds, silica, hydrated oxides, organic polymers, nanoclays, organoclay, organic polymers, silicon-phosphorous-nitrogen compounds, fluro-anion complexes, and mixtures thereof. Non-limiting examples of nitrogen-phosphorus flame retardant compounds include a nitrogen-containing phosphate, a nitrogen-containing polyphosphate, ammonium phosphate, ammonium pyrophosphate, piperazine pyrophosphate, piperazine polyphosphate, melamine pyrophosphate, or a combination thereof. The term "phosphate" refers to a salt or ester of a phosphoric acid. The term "pyrophosphate" refers to phosphate PO₄ structural units linked together by an oxygen atom. The term "polyphosphate" refers to a salt or ester of a polymeric oxyanion formed from three of more phosphate (PO₄) structural units linked together by sharing oxygen atoms. Nitrogen-phosphorus flame retardant compounds and/or compositions are described in U.S. Patent No. 7,803,856 to Perego et al., and U.S. Patent Application Publ. No. 2013/0248783 to Zhu et al., or can be obtained from commercial sources such as Adeka Palmarole (Japan) under the tradenames ADK STAB FP-2100JC, ADK STAB FP-2200S and ADK STAB FP-2500S. Non-limiting examples of nitrogen-containing polymers include poly(2,4-piperazinyl-6-morpholinyl-1,3,5-triazine), poly(2,4-piperazinyl-6-morpholinyl-1,3,5-triazine). Non-limiting examples, of phosphorus flame retardants includes resorcinol bis(diphenyl phosphate), bisphenol A bis(diphenyl phosphate), triphenyl phosphate, tricresyl phosphate, phosphoric acid derivatives, and the like. A fluro-anion complex can include potassium perfluorobutane sulfonate (Rimar salt). The total amount of flame retardant composition in the co-polycarbonate resin material can be 4 to 10 wt.%, or greater than or substantially equal to any one of, or between any two of: 4, 4.5, 5, 5.5, 6, 6.5, 7, 7.5, 8, 8.5, 9, 9.5, or 10 wt.%.

Processing aids can be used to help process the polymeric composition. A non-limiting example of a processing aid is a blend of anionic and ionic surfactants sold under the trade name STRUCKTOL® TR 251 by Struktol Company of America (USA).

### 3. Fibers

Non-limiting examples of fibers include glass fibers, carbon fibers, aramid fibers, polyethylene fibers, polyester fibers, polyamide fibers, ceramic fibers, basalt fibers, steel fibers, and/or the like. The fiber-containing composite can include, based on the total weight of the composite, 50 to 80 wt.% fibers or greater than or substantially equal to any one of, or between any two of: 50, 55, 60, 65, 70, 75, 80 wt.% fibers. Fibers of a composite can be provided in bundles (*e*.*g*., bundles of carbon, ceramic, carbon precursor, ceramic precursor, glass, and/or the like fibers). Such bundles may include any number of fibers, such as, for example, 400, 750, 800, 1,375, 1,000, 1,500, 3,000, 6,000, 12,000, 24,000, 50,000, 60,000, or more fibers. Fibers in a bundle can have an average filament diameter of 5, 6, 7, 8, 9, 10, 1 1, 12, 13, 14, 15, 16, 17, 18, 19, 20, 21, 22, 23, 24, 25, or more microns (*e*.*g*., from 5 to 30 microns, 10 to 20 microns, 12 to 15 microns, or any range there between). The fibers can be long (*e*.*g*., have a high aspect ratio). Aspect ratios can be from 2 to 10 or 10 to 500, or any value there between. Fibers can be provided with a coating (*e.g.* a coating of an organic polymer, such as an organosilane), a pigment, and/or the like. Fibers can also be provided as a woven mat.

### C. Process to Prepare Fiber-Containing Composites

Fiber-containing composites of the present invention can be made by dispersing fibers in a co-polycarbonate polymeric resin materials as described in International Application Publication No. WO 2016/142786 to Prins et al., which is incorporated by reference in its entirety. In such a method, a sheet or film that includes the co-polycarbonate polymeric resin materials and additive can be supplied between first and second spreaded fiber layers. Heat can be applied to the fiber layer/ co-polycarbonate polymeric resin materials /fiber layer material, followed by pressing the fiber layers into the co-polycarbonate polymeric resin materials. In some embodiments, after pressing is completed, the first or second fiber layers can be rubbed. In some embodiments, the fibers are not spread prior to heating. In another embodiment, the fiber-containing composite can be made by using known impregnation techniques. For example, Miller et al. in Polymers & Polymer Composites, 1996, Vol. 4, No. 7 describes impregnation techniques for thermoplastic matrix composites, which is incorporated by reference in its entirety. One such method can include providing supplying fibers to one or more solution baths (*e*.*g*., thermoplastic polymer in one or two baths) to form co-polycarbonate polymeric resin materials impregnated fibers, drying the fibers, and then pressing the fibers to produce a fiber-containing composite (e.g., prepreg sheets). In another embodiment, the co-polycarbonate polymeric resin materials and fibers can be stacked together, heated, and then pressed causing the co-polycarbonate polymeric resin materials to flow transverse to the fibers to from prepreg sheets of fiber-containing composites. In another embodiment, the polymer and fibers can be stacked together, heated, and then pressed causing the resin to flow transverse to the fibers to from prepreg sheets of reinforced thermoplastic materials. The fiber layer can have a fiber volume fraction of at least 30%, preferably 30 to 60%, and/or a thickness of 100 to 300 micrometers. In a preferred embodiment, the fiber-containing composite is a unidirectional tape. In some embodiments, the unidirectional tape can have a fiber content of at least 50 vol.%.

Also disclosed are multi-layer composites (*e*.*g*., stacks or laminates) that include fiber-containing composites of the present disclosure. Such laminates can include 2, 3, 4, 5, 6, 7, 8, 9, 10, or more layer where at least one layer is a fiber-containing composite of the present disclosure. In some laminates, at least two layers are positioned such that their respective fibers are substantially parallel to a first axis. In some laminates, at least two layers are positioned such that their respective fibers are not parallel to each other. Fiber-containing composites and laminates of the present disclosure can be assembled or processed into two-dimensional or three-dimensional structures, such as, for example, via winding and/or lay-up techniques.

Each of the layers can have a length and a width that is perpendicular to and smaller than the length, where the length and the width are each a distance between outer edges of the layer measured along a straight line. The length can be, but need not be, the largest such distance. Each of the layers can have a shape and dimensions that correspond to the shape and dimensions of a laminate and/or composite. To further illustrate, the largest face of each of the plies can have a surface area that is substantially equal to a surface area of the largest face of the laminate. To yet further illustrate, each of the layers can be rectangular. In other embodiments, one or more layers of a laminate can have a shape and/or dimensions that differ from the shape and/or dimensions of the laminate; such layers can, for example, be used to add stiffness and strength to a portion of the laminate that is smaller than the entirety of the laminate.

At least one layer can include a thermoplastic flame retardant co-polycarbonate resin material having a plurality of fibers dispersed therein. Some embodiments of the present methods include producing a laminate at least by stacking two or more layers (*e*.*g*., including one or more of any layers described above in a 0/90 orientation). By way of example, at least 2 or 3, 4, 5, 6, 7, 8, 9, 10 or more layers having a thickness of about 0.1 to 10 mm, or 0.25 to 5 mm can be stacked. During such stacking, any number of the laminates can be formed by placing sections of layer material, such as, for example, sections of unidirectional tape, adjacent to one another. In some methods, the two or more layers include two or more unidirectional first layers and one or more unidirectional second layer, and the stacking is performed such that: (1) fibers of the first layer are aligned in a first direction; (2) fibers of the one or more second layer are aligned in a second direction that is perpendicular to the first direction; and (3) the one or more second layers are disposed in contact with one another and between two of the first plies.

Layers that include fibers can have a pre-consolidation fiber volume fraction (V_{f}) that is greater than or substantially equal to any one of, or between any two of: 40, 45, 50, 55, 60, 65, 70, 75, 80, 85, or 90%. In some embodiments of the present laminates, one or more layers may not include fibers; such layer can, for example, include a sheet of co-polycarbonate resin material. In some embodiments, layers in the multi-layer composite can have varied fiber volume fraction. For example, outside layers of a multi-layer composite can have less fiber volume at the edge of the layer than layers between two outside layers.

In some embodiments, laminates can be prepared using known lamination methods. It should be understood that laminates can be made of layers having the same or different compositions. By way example, a laminate can be made of multiple layers where each layer can have the same composition, while another laminate can be made of multiple plies where each ply have a composition different than the ply that make up the laminate.

One or all of the layers can include fibers dispersed within the co-polycarbonate resin material or pressed into the co-polycarbonate resin material. By way of example, the laminates can be prepare using a double belt press with integrated contact heating and cooling supplied by, for example Meyer® (Maschinenfabrik, Herber Meyer GmbH, Germany). The different layers can enter the heat press unit in a defined stacking sequence at a rate of 1.5 m/min. The multi-layer stack can be pressed together in a first zone at a pressure of 0.1 to 0.4 N/cm², or (1 to 4 kPa, or 1, 1.5, 2, 2.5, 3, 3.5, 4 kPa or any value or range there between) and then heated to a temperature of 170 to 185 °C, (e.g., about 180 °C). The pressed stack can enter a second zone, pressed, and the heated to 190 to 200 °C (*e.g.*, about 195 °C). The pressed stack can enter a third zone, be pressed at a lower temperature of 185 to 195 °C (*e*.*g*., about 190 °C) to form the laminate. Heating and cooling can be maintained without release of pressure. In some embodiments, a static heated press can be used.

In the laminate, each of layers can be a unidirectional layer (*e*.*g*., a UD tape), or a layer having fibers, substantially all of which are aligned in a single direction. More particularly, in each of the layers, the fibers can be aligned with either the length of laminate (which may be characterized as a 0-degree unidirectional ply) or the width of the laminate (which may be characterized as a 90-degree unidirectional ply). The phrase, "aligned with" means within 10 degrees of parallel. Other embodiments of the present laminates can include one or more unidirectional layers, each having fibers that are aligned in any suitable direction. For example, a unidirectional layer can include fibers aligned in a direction, where the smallest angle between the direction and a length of a laminate including layer can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can include one or more layers, each having fibers that define a woven structure (*e*.*g*., as in a layer having a plane, twill, satin, basket, leno, mock leno, or the like weave). For example, a layer can include a first set of fibers aligned in a first direction and a second set of fibers aligned in a second direction that is angularly disposed relative to the first direction, where the first set of fibers is woven with the second set of fibers. A smallest angle between first direction and second direction can be greater than or substantially equal to any one of, or between any two of: 10, 15, 20, 25, 30, 35, 40, 45, 50, 55, 60, 65, 70, 75, 80, 85, or 90 degrees. The smallest angle between first direction and a length of a laminate including such a layer can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can include one or more layers, each formed from sections of layered material. For example, a unidirectional layer can be formed from sections of unidirectional fiber material that has been placed adjacent to one another. To form such a layer, sections of layered material can be placed adjacent to one another manually and/or by an automated material laying machine.

In some embodiments, 0-degree unidirectional layers and 90-degree unidirectional layers can be stacked such that the 0-degree unidirectional layers are in contact with one another (meaning each is in contact with at least one other) and are disposed between two of the 90-degree unidirectional layers. In some embodiments, laminates can include first and second sub-stacks of 90-degree unidirectional layers and a third sub-stack of 0-degree unidirectional plies, where the third sub-stack is disposed between the first and second sub-stacks. In some laminates, each of the sub-stacks can include three layers. However, in other embodiments, such sub-stacks can each be replaced with a single layer or can include 2, 3, 4, 5, 6, 7, 8, 9, or more layers. Other embodiments of the present laminates can include any suitable layers (*e*.*g*., including one or more of any layer described above) stacked in any suitable configuration (*e*.*g*., balanced, symmetric, asymmetric, and/or the like).

### D. Articles of Manufacture

In some embodiments, the co-polycarbonate resin material can be extruded to manufacture a layer (or ply), and the layer can be further embossed to form an embossed layer. The polycarbonate composition can be molded into useful shaped articles by a variety of methods, such as injection molding, extrusion, rotational molding, blow molding, and thermoforming. Article of manufacture can includes any of the fiber-containing composites of the present disclosure or laminates made therefrom. Non-limiting examples of such articles of manufacture include automotive parts (*e*.*g*., doors, hoods, bumpers, A-beams, B-beams, battery casings, bodies in white, reinforcements, cross beams, seat structures, suspension components, hoses, and/or the like), braided structures, woven structures, filament wound structures (*e*.*g*., pipes, pressure vessels, and/or the like), aircraft parts (*e*.*g*., wings, bodies, tails, stabilizers, and/or the like), wind turbine blades, boat hulls, boat decks, transportation components, rail cars, rail car parts, sporting goods, window lineals, pilings, docks, reinforced wood beams, retrofitted concrete structures, reinforced extrusion or injection moldings, hard disk drive (HDD) or solid state drive (SSD) casings, TV frames, smartphone mid-frames, smartphone unibody casings, tablet mid-frames, tablet unibody casings, TV stands or tables, lap-top computer casings, ropes, cables, protective apparel (*e*.*g*., cut-resistant gloves, helmets, and/or the like), armor, plates, and the like. Non-limiting examples of transportation components can include floor panels, claddings, covers, and tray tables for train interiors. Non-limiting examples of claddings include: interior vertical surfaces, such as side walls, front walls, end-walls, partitions, room dividers, flaps, boxes, hoods and louvres; interior doors and linings for internal and external doors; window insulations; kitchen interior surfaces; interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### (Preparation of Co-Polycarbonate Resin Material of the Present Invention)

The compounds used to manufacture unidirectional (UD) tapes using the HPFIT impregnation technology and the comparative products are listed in Table 1 as described in U.S. Patent Application Publication No. 2018/0043580 to Prins et al.

**Table 1**

| |
|---|
| Linear Polycarbonate (Molecular weight 30500±400 Dalton; MVR 300C, 1.2kg (6±1 cc/10min)) (PC105) |
| Linear Polycarbonate (Molecular weight 21800±400 Dalton; MVR 300C, 1.2kg (26±4 cc/10min)) (PC175 LF powder 175 resin) |
| Linear Polycarbonate (Molecular weight 18800±400 Dalton; MVR 300C, 1.2kg (60±10 cc/10min)) (PC115) |
| Tris(di-t-butylphenyl)phosphite (TBPP) |
| Poly(aliphatic ester)-polycarbonate copolymer(Molecular weight 21400 Dalton; MVR 300C, 1.2kg (36 cc/10min)) (HFD8089) |
| Poly(aliphatic ester)-polycarbonate copolymer (Molecular weight 36500 Dalton; MVR 300C, 1.2kg (6.3 cc/10min)) (HFD8090) |

By adjustment of the extruder throughput and line speed, a polymer film was extruded with a given thickness to produce a UD tape with a final Fiber Volume Fraction (FVF). The extrusion temperature (melt pipe) and die temperature were adjusted to enable the production of a polymeric film of the present invention with consistent dimensions in function of time and line speed. The UD tapes were manufactured by using a commercial continuous carbon fiber supplied by Toho Tenax HTS45-E23 12K (14 tows).

The FVF was calculated from the weight of burn-off, where the polymer was burned to expose the fiber. A meter-long piece of tape was measured out, and the weight of the tape was taken. The tape was burned (to combust the polymer), and the remaining material (the fibers) were weighed. With 14 tows per tape, and with each tow weighting 0.8 g/m, the weight fraction of carbon fibers within the tape were calculated. Then the weight fraction was transformed to a volume fraction using the density of each material.

The melt strength of the polymeric film was visually assessed in the zone where the film exited the extrusion die until it hit the continuous fiber bed. A rating of 1, 3, and 9 was assigned of respectively insufficient, poor and excellent melt strength. In the case of insufficient melt strength (rating 1), severe necking of the film occurred at the extrusion die upon drawing of the film. This caused film breakage and a highly unstable film resulting in poor quality UD tape. In case of poor melt strength (rating 3), some degree of necking occurred and caused an instable film resulting in dry spots and edges of the UD tape. This resulted in a non-robust process for manufacture UD tapes. In case of excellent melt strength, limited necking of the film was observed and results in a stable film. In such situations the drawing speed (or line speed) was achieved to increase the economics of the process while maintaining UD tape quality. UD Tape quality was determined by: tape dimensions (150µm); FVF: ≥50% and ≤60%; fully impregnated fibers (void content < 1 %, preferably 0%), while having an economic line speed: ≥3.5 m/min. Table 2 lists the result of co-polycarbonate resin material fiber composites (*e*.*g*., prepregs).

**Table 2**

| | **CE#1** | **Exp #1.3** | **Exp #1.5** |
|---|---|---|---|
| | **HF1110** | **HFD8089 + 20%HFD8090** | **HFD8089 + 40%HFD8090** |
| **Ingredients** | | | |
| LF powder 175 resin | 49.973 | | |
| PC105 | 10 | | |
| LF powder 175 resin | 39.982 | | |
| Sebacic acid/BPA/PCP polyestercarbonate (high Mw) | 0 | 19.991 | 39.982 |
| Sebacic Acid/BPA copolymer (low Mw) | 0 | 79.964 | 59.973 |
| TBPP | 0.045 | 0.045 | 0.045 |
| Biocontent (wt.%) | 0 | 5.0 | 4.8 |
| Potential PCR content (wt.%) | 0 | 0 | 0 |

| **Compound characterization** | | | |
|---|---|---|---|
| MVR @ 300C, 1.2kg (cc/10min) | 21.68 | 24.6 | 14.9 |
| MVR @ 275C, 1.2kg (cc/10min) | 9.72 | 11.37 | 7.1 |
| MV @ 300C, 500 1/s (Pa.s) | 158.54 | 152.21 | 232.99 |
| MV @ 275C, 500 1/s (Pa.s) | 457.64 | 331 | 491.34 |
| INI 23C, 5.5J, (kJ/m2) | 55.31 | 59.12 | 66.9 |
| Tensile Modulus (Gpa) | 2.23 | 2.16 | 2.15 |
| Yield strength (Mpa) | 59.27 | 56.39 | 56.1 |
| Strength at break (Mpa) | 69.34 | 63 | 66.71 |
| Yield strain (%) | 5.91 | 5.64 | 5.59 |
| Nominal strain at break (%) | 119.1 | 117.06 | 124.26 |
| Vicat softening temp 50N, 120C/h (°C) | 145.5 | 132.4 | 132.25 |
| Tg by modulated DSC (°C) | 145 | ND | 134.2 |
| UL94 V Rating at 1.0 mm | V2 | V2 | V2 |

| **Optimal UD tape manufacturing conditions** | | | |
|---|---|---|---|
| Extruder throughput (kg/hr) | 1.5 | 1.5 | 1.5 |
| Melt pipe temperature (°C) | 280 | 270 | 270 |
| Die temperature (°C) | 270 | 260 | 260 |
| Die pressure (bar) | | 35 | 70 |
| Melt strength | 9 | 3 | 9 |
| Impregnation | 9 | 9 | 9 |
| Max. line speed (m/min) | 5 | 5.1 | 7 |
| Max. attainable Fiber Volume Fraction | 55 | 50 | 55 |
| **Tape on specification** | **Yes** | **No** | **Yes** |

The UD fiber composites (*e*.*g*., prepregs) of the present invention (*e*.*g*., made using the co-polycarbonate polymeric resin materials derived from poly(aliphatic ester)-polycarbonate copolymer materials) had comparable or better properties than the UD tapes made with a known commercial linear polycarbonate compound, HF1110 (CE#1, SABIC), having a glass transition temperature of 145 °C. Example 1.3 demonstrated that the amount of the low MW poly(aliphatic ester)-polycarbonate copolymer need to be less than the high MW poly(aliphatic ester)-polycarbonate copolymer as the UD tapes made using this formulation had insufficient melt strength. Although the die/melt temperature was decreased from 270 to 260 degrees Celsius in Example 1.3, the melt strength remained poor; thereby compromising the impregnation quality of the UD prepreg. Surprisingly it was found that increasing the amount of high MW poly(aliphatic ester)-polycarbonate copolymer to greater than 35 wt.% (e.g., about 40 wt%) enabled the production of UD tapes up to line speeds of 7 m/min (Exp 1.5) that met commercial specifications

Although embodiments of the present application and their advantages have been described in detail, it should be understood that various changes, substitutions and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A co-polycarbonate polymeric resin material comprising at least 35 wt.% of at least one poly(aliphatic ester)-polycarbonate copolymer, wherein the co-polycarbonate polymeric resin material comprises a shear melt viscosity of 50 to 500 Pa.s measured at 275 °C.

2. The co-polycarbonate polymeric resin material of claim 1, wherein the at least one poly(aliphatic ester)-polycarbonate copolymer is a poly(aliphatic ester)-polycarbonate copolymer having a molecular weight of at least 30,000 Daltons, preferably 30,000 to 40,000 Daltons, a poly(aliphatic ester)-polycarbonate copolymer having a molecular weight of up to 25,000 Daltons, preferably 15,000 to 25,000 Daltons, or a blend thereof.

3. The co-polycarbonate polymeric resin material of claim 2, wherein the resin material comprises 37% to 100% wt.% of the at least one poly(aliphatic ester)-polycarbonate copolymer having a molecular weight of at least 30,000 Daltons, preferably 30,000 to 40,000.

4. The co-polycarbonate polymeric resin material of claim 2, wherein the polymeric resin comprises a blend of:
the poly(aliphatic ester)-polycarbonate copolymer having a molecular weight of up to 25,000 Daltons, preferably 15,000 to 25,000 Daltons, and a branched polycarbonate polymer; or
the poly(aliphatic ester)-polycarbonate copolymer having a molecular weight of at least 30,000 Daltons, preferably 30,000 to 40,000, and at least one of the poly(aliphatic ester)-polycarbonate copolymer having a molecular weight of up to 25,000 Daltons, preferably 15,000 to 25,000 Daltons or a branched polycarbonate polymer, or a blend of all three.

5. The co-polycarbonate polymeric resin material of any one of claims 1 to 4, comprising a glass transition (T_{g}) temperature of 100 to 140 ° C.

6. The co-polycarbonate polymeric resin material of any one of claims 1 to 5, further comprising a siloxane polycarbonate copolymer.

7. The co-polycarbonate polymeric resin material of any one of claims 1 to 6, further comprising:
a flame retardant comprising a phosphate, an alkyl sulfonate salt, a carbonate salt, a fluoro-anion complex material, or an organic compound, or a mixture thereof; and/or
an additive comprising a mold release agent, a filler material, a thermal stabilizer, a chain extender, a quencher, a color or melt stabilizer, a flame retardant synergist, or mixtures thereof.

8. The co-polycarbonate polymeric resin material of any one of claims 1 to 7, wherein the at least one poly(aliphatic ester)-polycarbonate copolymer comprises 5 to 10 mol.% of sebacic acid and/or wherein the at least one poly(aliphatic ester)-polycarbonate copolymer is derived from bisphenol-A and sebacic acid.

9. The co-polycarbonate polymeric resin material of any one of claims 1 to 8, wherein the co-polycarbonate polymeric resin is capable of being extruded into a film having a thickness of 10 to 200 microns, cryogenically grinded into a micronized powder, or dissolved in a solvent.

10. A fiber composite comprising at least one fiber layer of a fiber material and the co-polycarbonate polymeric resin material of any one of claims 1 to 9, wherein the fiber layer comprises a fiber volume fraction of at least 30%, preferably 30 to 60%, and/or a thickness of 100 to 300 micrometers.

11. The fiber composite of claim 10, wherein the fiber material is a continuous fiber, preferably a continuous glass, carbon, ceramic, aramid, or polymeric fiber, or any combination thereof.

12. The fiber composite of any one of claims 10 to 11, wherein the fiber composite is a unidirectional tape.

13. A unidirectional tape comprising at least one fiber layer of the fiber material embedded in the co-polycarbonate polymeric resin material of any one of claims 1 to 9.

14. The unidirectional tape of claim 13, comprising a fiber volume fraction of at least 50%.

15. A multi-layer composite comprising at least two layers of the fiber composite of any one of claims 10 to 12 wherein the multi-layer composite further comprises:
(a) a first layer of the fiber composite comprising continuous fibers aligned in a first direction; and a second layer of the fiber composite comprising continuous fibers aligned in a second direction that is angularly disposed relative to the first direction, wherein the smallest angle between the first direction and the second direction is from 20 to 90 degrees, preferably 30 to 90 degrees, more preferably 45 to 90 degrees;
(b) a UL94 V2 rating or better;
(c) a thickness of 0.6 mm to 2 mm; and/or
(d) any combination thereof or all of (a)-(c).
